# EUROPÄISCHE PATENTSCHRIFT

(11) **EP 4 001 013 B1**
(45) Veröffentlichungstag und Bekanntmachung des Hinweises auf die Patenterteilung: **09.04.2025**
(21) Anmeldenummer: 21207685.5
(22) Anmeldetag: 11.11.2021
(51) Int. Cl.: B60Q 3/80, B60Q 3/76, B60Q 3/00, B60Q 3/60, F21S 41/13

(54) **FAHRZEUGBELEUCHTUNGSSYSTEM, FAHRZEUG UND VERFAHREN ZUR BELEUCHTUNG EINES FAHRZEUGINNENRAUMS**
VEHICLE LIGHTING SYSTEM, VEHICLE AND METHOD FOR ILLUMINATING A VEHICLE INTERIOR
SYSTÈME D'ÉCLAIRAGE DE VÉHICULE, VÉHICULE ET PROCÉDÉ D'ÉCLAIRAGE D'UN HABITACLE DE VÉHICULE

(30) Priorität: 19.11.2020 DE 102020214617
(43) Veröffentlichungstag der Anmeldung: 25.05.2022
(73) Patentinhaber: Volkswagen Aktiengesellschaft, 38440 Wolfsburg (DE)
(72) Erfinder: Erdogan, Melisa, 38102 Braunschweig (DE)

(56) Entgegenhaltungen:
- DE-A1- 102009 051 260
- JP-A- 2005 067 433
- US-A1- 2009 196 031

## Beschreibung

Die Erfindung betrifft ein Fahrzeugbeleuchtungssystem, ein Fahrzeug und ein Verfahren zur Beleuchtung eines Fahrzeuginnenraums. Die Erfindung liegt auf dem Gebiet der Fahrzeuginnenraumbeleuchtungen.

Der Innenraum eines Fahrzeugs, in dem sich während der Benutzung des Fahrzeugs typischerweise die Insassen befinden, wird zumeist zumindest zeitweilig mittels eines Fahrzeugbeleuchtungssystems beleuchtet. Moderne Fahrzeugbeleuchtungssysteme basieren in der Regel auf Leuchtdioden (engl.: Light Emitting Diode, LED), welche das Licht für die Beleuchtung bereitstellen. In Abhängigkeit der Anforderungen und/oder des Herstellerwunsches und/oder des Insassenwunsches kann die spektrale Zusammensetzung des Lichts für die Beleuchtung des Fahrzeuginnenraums in verschiedenen Fahrzeugen und/oder bei verschiedenen Beleuchtungsanordnungen unterschiedlich ausgestaltet sein. So ist in manchen Fällen ein warmweißes Lichtspektrum bevorzugt, während in anderen Fällen ein kaltweißes Lichtspektrum bevorzugt wird. Sowohl kaltweiße als auch warmweiße Emissionsspektren werden mittels LEDs typischerweise dadurch erzeugt, dass eine blaue oder ultraviolette LED in Verbindung mit einer fluoreszenten und/oder phosphoreszenten Konversionsschicht bzw. einem Konversionselement verwendet wird. Dabei werden von der Emission dieser LED zum einen der blaue spektrale Anteil des resultierenden Emissionsspektrums bereitgestellt und zum anderen ein Teil des von dieser LED emittierten Lichts durch die Konversionsschicht in Licht mit einer längeren Wellenlänge im sichtbaren Spektralbereich konvertiert, wie etwa in den gelben oder grünen oder roten Spektralbereich, um auf diese Weise mittels Lichtmischung ein resultierendes Lichtspektrum zu erhalten, welches sich für das menschliche Auge als weißes Licht darstellt. Je nach dem Mischungsverhältnis des blauen Lichts zu dem konvertierten Licht mit längerer Wellenlänge und/oder in Abhängigkeit der spektralen Anteile, welche durch die Konversionsschicht erzeugt werden, können dabei verschiedene Weißlichtspektren erzeugt werden, welche sich in der wahrgenommenen Farbtemperatur unterscheiden. So kann beispielsweise bei Bedarf kaltweißes oder warmweißes Licht erzeugt werden. In jedem Fall weisen diese Lichtspektren jedoch einen signifikanten blauen spektralen Anteil auf, welcher durch die dem Fahrzeugbeleuchtungssystem zu Grunde liegenden blaue oder ultraviolette LED emittiert wird.

Für Insassen und insbesondere deren Augen können gewisse Störungen des Wohlbefindens entstehen, wenn diese blauem Licht über einen langen Zeitraum und/oder blauem Licht von hoher Intensität übermäßig ausgesetzt sind. Derartige Störungen des Wohlbefindens sind im Stand der Technik bekannt. Insbesondere kann das übermäßige Einwirken von blauem Licht auf Personen und deren Augen zu einer Störung des Schlaf-Wach-Rhythmus der Personen führen.

Die die Merkmale vom Oberbegriff der nebengeordneten Ansprüche 1 und 3 aufweisende JP 2005 067433 A beschreibt eine Beleuchtungssystem mit einer Sicherheitsfunktion. Konkret weist das Beleuchtungssystem eine Beleuchtungseinrichtung mit einem Mikrocomputer, einer lichtemittierenden Einheit sowie einer Kamera auf. Der Mikrocomputer kann Eingangssignale eines Lampenschalters, eines Radiowellensensors und eines Vibrationssensors verarbeiten. Ferner werden Signale eines Türöffnungsschalters und einer Warnstufensetzeinrichtung verarbeitet. Die lichtemittierende Einheit umfasst eine sichtbares Licht aussendende LED mit Licht hoher Helligkeit sowie eine Infrarotlicht aussendende LED. In Abhängigkeit der Eingangssignale können durch den Mikrocomputer aus einem Speicher unterschiedliche Beleuchtungsmodi abgerufen werden. So wird in einem ersten Beleuchtungsmodus eine Innenbeleuchtungsfunktion aktiviert, bei der nur die sichtbares Licht aussendende LED sichtbares Licht aussendet. In einem zweiten Beleuchtungsmodus wird eine blitzende Fotografierfunktion ausgelöst, bei der die sichtbares Licht aussendende LED für eine kurze Zeitdauer Licht hoher Helligkeit aussendet und gleichzeitig die Blende der Kamera geöffnet wird. Durch einen dritten Beleuchtungsmodus wird die Funktion einer Nachtsichtkamera aktiviert, wobei die Blende der Kamera mit der Lichtaussendung durch die Infrarotlicht aussendende LED synchronisiert wird. In einem vierten Betriebsmodus werden die Funktionen der Innenraumbeleuchtung und der Nachtsichtkamera miteinander kombiniert. Dabei strahlt die sichtbares Licht aussendende LED sichtbares Licht mit niedriger Helligkeit aus, während die Infrarotlicht aussendende LED für eine bestimmte Zeitdauer Infrarotlicht aussended und mit der Blende der Kamera synchronisiert wird. Schließlich werden in einem fünften Betriebsmodus sowohl die lichtemittierende Einheit als auch die Kamera ganz ausgeschaltet.

Aus der DE 10 2009 051260 A1 ist ein Kraftfahrzeug mit einer Vorrichtung bekannt, mit der ein Fahrzeuginsasse behandelt werden kann. Konkret weist die Vorrichtung eine Kommunikationsschnittstelle zur Kommunikation mit dem Fahrzeuginsassen und eine auf den Fahrzeuginsassen wirkende Behandlungsvorrichtung auf. In Abhängigkeit des Dialoges ist der Fahrzeuginsasse durch die Behandlungsvorrichtung mit einer Strahlung bestrahlbar, bei der eine Lichttherapie mit einem spektralen, dem Sonnenlicht angenäherten Licht durchführbar ist.

Schließlich wird in der US 2009/196031 A1 ein elektrischer Schaltkreis mit vier Leuchtdioden beschrieben. Durch die Ansteuerung mehrerer der Leuchtdioden kann Licht bestimmter Farbe erzeugt werden. Zumindest eine der Leuchtdioden kann Licht im Spektrum des nicht sichtbaren Lichts erzeugen, bspw. Ultraviolett- oder Infrarot-Licht.

Es ist Aufgabe der Erfindung, ein Fahrzeugbeleuchtungssystem, ein Fahrzeug und ein Verfahren zur Beleuchtung eines Fahrzeuginnenraums bereitzustellen, welches ein geringeres Maß an unerwünschten Einflüssen auf die Fahrzeuginsassen ausüben kann.

Die Aufgabe wird gelöst durch ein Fahrzeugbeleuchtungssystem, ein Fahrzeug und ein Verfahren zur Beleuchtung eines Fahrzeuginnenraums mit den Merkmalen der jeweiligen unabhängigen Ansprüche. Bevorzugte Ausführungsformen sind Gegenstand der abhängigen Ansprüche und der nachfolgenden Beschreibung.

Das Fahrzeugbeleuchtungssystem umfassend zumindest eine Weißlicht-LED-Anordnung und zumindest eine infrarote LED, wobei das Fahrzeugbeleuchtungssystem dazu eingerichtet ist, mittels der zumindest einen Weißlicht-LED-Anordnung und der zumindest einen infraroten LED eine Lichtemission mit einem infraroten spektralen Leistungsanteil von mindestens 40% und weniger als 70% der gesamten Lichtemissionsleistung bereitzustellen.

Eine Weißlicht-LED-Anordnung ist dabei eine Leuchtmittelanordnung auf Basis einer oder mehrerer LEDs, welche dazu ausgebildet ist, weißes Licht zu emittieren. Dabei weist die Weißlicht-LED-Anordnung neben einer oder mehreren LED-Lichtquellen ein oder mehrere Konversionselemente auf, mittels welchen zumindest ein Teil des von der bzw. den LEDs emittierten Lichts in einen anderen Wellenlängenbereich konvertiert wird.

Eine infrarote LED ist dabei eine LED, welche Licht im infraroten Spektralbereich emittiert. Zusätzlich zur Emission von Licht im infraroten Spektralbereich kann die infrarote LED optional einen vernachlässigbaren Anteil von Licht im roten sichtbaren Spektralbereich emittieren, wenngleich dies nicht zwingend erforderlich ist. Optional emittiert die infrarote LED ausschließlich im unsichtbaren, infraroten Spektralbereich. Eine infrarote LED ist dabei dadurch gekennzeichnet, dass zumindest das spektrale Maximum des Emissionsspektrums im infraroten Spektralbereich liegt. Der infrarote Spektralbereich ist dabei jener Spektralbereich, welcher längere Wellenlängen bzw. niedrigere Photonenenergien als der sichtbare Spektralbereich aufweist und sich im Spektrum an den roten sichtbaren Spektralbereich anschließt. Unter den infraroten Spektralbereich fällt dabei insbesondere der Spektralbereich von 780 nm bis 1200 nm Wellenlänge. Die infrarote LED kann dabei ein schmalbandiges oder ein breitbandiges Emissionsspektrum aufweisen. Die infrarote LED kann dabei optional neben der eigentlichen LED noch weitere Elemente aufweisen, wie etwa eine Konversionsschicht und/oder ein Konversionselement, eine oder mehrere optische Komponenten und/oder eine oder mehrere elektronische Komponenten.

Ein infraroter spektraler Leistungsanteil von mindestens 10% der gesamten Lichtemissionsleistung bedeutet dabei, dass mindestens 10 % der gesamten Lichtemissionsleistung im infraroten Spektralbereich liegen. Bildet man einen Quotienten der Lichtemissionsleistung im infraroten Spektralbereich, insbesondere im Bereich von 780 nm bis 1200 nm Wellenlänge, und der gesamten Lichtemissionsleistung, so hat dieser Quotient mindestens einen Wert von 0,1 zu betragen, um das obige Merkmal zu erfüllen.

Das Einstellen der Emissionsleistung der zumindest einen Weißlicht-LED-Anordnung derart, dass die Lichtemission im sichtbaren Spektralbereich eine vorgegebene Helligkeit aufweist, bedeutet dabei, dass die Emissionsleistung der zumindest einen Weißlicht-LED-Anordnung derart eingestellt wird, dass die Vorgaben zur Helligkeit im Bereich des Fahrzeuginnenraums, der durch die zumindest eine Weißlicht-LED-Anordnung beleuchtet wird, innerhalb eines vorgegebenen Toleranzbereichs erfüllt werden. Diese Vorgaben können beispielsweise vom Hersteller vorgegeben und/oder von einem Fahrzeuginsassen eingestellt werden. Die vorgegebene Helligkeit ist dabei nicht notwendigerweise ein exakter und/oder messbarer Wert, sondern kann auch ein subjektives Empfinden des Fahrzuginsassen darstellen.

Die Erfindung bietet den Vorteil, dass die Lichtemission des Fahrzeugbeleuchtungssystems im infraroten Spektralbereich erweitert werden kann, wodurch der relative Anteil des blauen Emissionslichts an der gesamten Lichtemission des Fahrzeugbeleuchtungssystems abnimmt. Besonders vorteilhaft ist dabei, dass durch die Hinzufügung des infraroten spektralen Anteils zum Emissionslichtspektrum der sichtbare absolute Anteil des Emissionslichtspektrums nicht oder nur in vernachlässigbarem Maße verändert wird, sodass die visuelle Wahrnehmung der Lichtemission des Fahrzeugbeleuchtungssystems nicht beeinträchtigt wird. Auf diese Weise kann durch die Erfindung der unerwünschte Blaulichtanteil an der gesamten Lichtemission reduziert oder gar ganz eliminiert werden und dennoch die visuelle Wahrnehmung der Lichtemission des Fahrzeugbeleuchtungssystems beibehalten werden. Somit bietet die Erfindung den Vorteil, dass etwaige Designvorgaben hinsichtlich der visuellen Wahrnehmung der Lichtemission des Fahrzeugbeleuchtungssystems beibehalten werden können und zugleich der gegebenenfalls unerwünschte Blaulichtanteil des Fahrzeugbeleuchtungssystems reduziert oder gar ganz eliminiert werden kann. Insbesondere bietet die Erfindung auch den Vorteil, dass der gegebenenfalls unerwünschte Blaulichtanteil selbst bei der Verwendung einer kaltweiß emittierenden Weißlicht-LED-Anordnung reduziert oder gar ganz eliminiert werden kann.

Optional beträgt der infrarote spektrale Leistungsanteil mindestens 15 %, optional mindestens 20 %, optional mindestens 30 %, Erfindungsgemäß beträgt der infrarot spektrale Leistungsanteil mindestens 40 % der gesamten Lichtemissionsleistung des Fahrzeugbeleuchtungssystems. Zusätzlich beträgt der infrarote spektrale Leistungsanteil nicht mehr als 70 % der gesamten Lichtemissionsleistung des Fahrzeugbeleuchtungssystems. Dies bietet den Vorteil, dass der Anteil des blauen Lichts am gesamten Lichtemissionsspektrum des Fahrzeugbeleuchtungssystems weiter reduziert werden kann und dennoch ein Emissionsspektrum des Fahrzeugbeleuchtungssystems bereitgestellt wird, welches mit dem menschlichen Auge als weißes Licht wahrnehmbar ist.

Optional ist das Fahrzeugbeleuchtungssystem dazu eingerichtet, die Lichtemission mit einem sonnenlicht-ähnlichem Spektrum bereitzustellen. Optional erfolgt demnach das Einstellen der Emissionsleistung der zumindest einen infraroten LED derart, dass die Lichtemission des Fahrzeugbeleuchtungssystems mit einem sonnenlicht-ähnlichen Spektrum erfolgt. Dies bedeutet, dass die durch die zumindest eine Weißlicht-LED-Anordnung bereitgestellten spektralen Leistungsanteile einerseits und die durch die zumindest eine infrarote LED bereitgestellten infraroten spektralen Leistungsanteile andererseits in einem ähnlichen oder optional in einem identischen Verhältnis zueinanderstehen, wie im Sonnenlichtspektrum. Das Sonnenlichtspektrum ist dabei optional als das terrestrische Sonnenlichtspektrum mit einer Luftmasse AM1,5 anzusehen. Alternativ kann jedoch auch das extraterrestrische Sonnenspektrum mit einer Luftmasse AM0 herangezogen werden. Dies bietet den Vorteil, dass das Emissionsspektrum des Fahrzeugbeleuchtungssystems an die natürlichen Sehgewohnheiten des menschlichen Auges angepasst werden kann, ohne dabei die visuelle Wahrnehmung der Lichtemission des Fahrzeugbeleuchtungssystems zu beeinträchtigen.

Die zumindest eine Weißlicht-LED-Anordnung ist dazu ausgelegt, kaltweißes oder warmweißes Licht zu emittieren. Sowohl das kaltweiße als auch das warmweiße Licht werden dabei mit einem infraroten spektralen Anteil versehen, um auf diese Weise das Emissionsspektrum des Fahrzeugbeleuchtungssystems wunschgemäß anzupassen.

Optional weist die zumindest eine infrarote LED ein Emissionsspektrum auf, welches zwischen 780 nm und 1200 nm Wellenlänge liegt. Dies bietet den Vorteil, dass effiziente LED-Lichtquellen für die Bereitstellung des infraroten spektralen Anteils verwendet werden können und zudem der infrarote spektrale Leistungsanteil vollständig unsichtbar für das menschliche Auge ist, sodass eine Beeinträchtigung der visuellen Wahrnehmung der Lichtemission des Fahrzeugbeleuchtungssystems vermieden werden kann. Dabei ist es nicht zwingend erforderlich, dass das Emissionsspektrum der infraroten LED den gesamten Bereich von 780 nm bis 1200 nm Wellenlänge abdeckt. Vielmehr ist es optional ausreichend, wenn die infrarote LED Licht in einem schmaleren Spektralbereich emittiert, der jedoch den Spektralbereich von 780 nm bis 1200 nm Wellenlänge nicht überschreitet.

Optional besteht die zumindest eine infrarote LED zumindest teilweise aus GaAs (Galliumarsenid), AlGaAs (Aluminium-Galliumarsenid) und/oder InGaAs (Indium-Galliumarsenid). Dies bietet den Vorteil, dass damit sehr effiziente und kostengünstige infrarote LEDs bereitgestellt werden können. Optional kann eine derartige infrarote LED zusammen mit zumindest einer Weißlicht-LED-Anordnung auf einer Platine des Fahrzeugbeleuchtungssystems angeordnet werden.

Optional umfasst das Fahrzeugbeleuchtungssystem ferner eine Steuereinheit, wobei die Steuereinheit dazu eingerichtet ist, die Emissionsleistung der zumindest einen Weißlicht-LED-Anordnung derart einzustellen, dass die Lichtemission im sichtbaren Spektralbereich eine vorgegebene Helligkeit aufweist, und die zumindest eine infrarote LED derart einzustellen, dass die Lichtemissionsleistung des Fahrzeugbeleuchtungssystem einen infraroten spektralen Leistungsanteil von mindestens 40% aufweist. Dies bietet den Vorteil, dass die durch das Fahrzeugbeleuchtungssystem bereitgestellte Beleuchtung in gewohnter Weise dahingehend optimiert eingestellt werden kann, dass diese die gewünschten visuellen Eigenschaften aufweist. Das Einstellen des infraroten spektralen Leistungsanteils erfolgt sodann optional auf die Weise, dass dieser der vorgegebenen oder vorliegenden Emissionsleistung im sichtbaren Spektralbereich angepasst wird.

Die zumindest eine Weißlicht-LED-Anordnung weist als ein Merkmal der Erfindung zumindest eine blaue LED und/oder eine ultraviolette LED und zumindest ein fluoreszierendes und/oder phosphoreszierendes Konversionselement auf, welches einen Teil des von der zumindest einen blauen und/oder ultravioletten LED emittierten Lichts in Licht mit einer längeren Wellenlänge konvertiert. Alternativ oder zusätzlich weist die zumindest eine Weißlicht-LED-Anordnung zumindest eine blaue LED und zumindest eine weitere LED aufweist, welche im gelben, grünen oder roten Spektralbereich emittiert. Auf diese Weise kann durch Farbmischung ein Emissionsspektrum erreicht werden, welches als weißes oder annähernd weißes Licht wahrgenommen wird.

Ein Fahrzeug kann dabei beispielsweise in Form eines Landfahrzeugs, Luftfahrzeugs oder Wasserfahrzeugs ausgebildet sein. Ein Landfahrzeug kann beispielsweise als ein Straßenfahrzeug oder als ein schienengebundenes Fahrzeug ausgebildet sein. Insbesondere kann ein Fahrzeug als ein Kraftfahrzeug vorliegen, wie etwa als Personenkraftwagen, Lastkraftwagen, Autobus oder Motorrad.

Die oben genannten und im Folgenden erläuterten Merkmale und Ausführungsformen sind dabei nicht nur als in den jeweils explizit genannten Kombinationen offenbart anzusehen, sondern sind auch in anderen technisch sinnhaften Kombinationen und Ausführungsformen vom Offenbarungsgehalt umfasst.

Weitere Einzelheiten und Vorteile der Erfindung sollen nun anhand der folgenden Beispiele und bevorzugten Ausführungsformen mit Bezug auf die Figuren näher erläutert werden.

Es zeigen:
- Fig. 1: in einer schematischen Darstellung ein Fahrzeugbeleuchtungssystem gemäß einer optionalen Ausführungsform;
- Fig. 2: das Fahrzeugbeleuchtungssystem der Fig. 1 in einer schematischen Seitenansicht;
- Fig. 3: in einer schematischen Darstellung ein Fahrzeug 30 gemäß einer optionalen Ausführungsform der Erfindung in Seitenansicht.

In den folgenden Figuren werden gleiche oder ähnliche Elemente in den verschiedenen Ausführungsformen der Einfachheit halber mit gleichen Bezugszeichen bezeichnet.

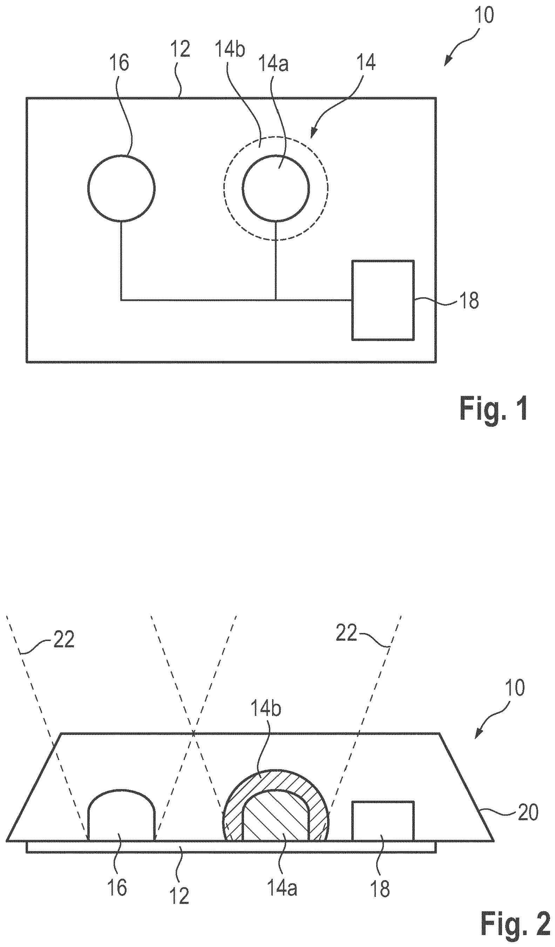

Figur 1 zeigt in einer schematischen Darstellung ein Fahrzeugbeleuchtungssystem 10 gemäß einer optionalen Ausführungsform. Das Fahrzeugbeleuchtungssystem 10 ist dabei als ein Fahrzeuginnenraumbeleuchtungssystem ausgebildet und weist eine Platine 12 auf, auf welcher eine Weißlicht-LED-Anordnung 14 und eine infrarote LED 16 angeordnet sind. Außerdem weist das Fahrzeugbeleuchtungssystem 10 eine Steuereinheit 18 auf, welche ebenfalls auf der Platine 12 angeordnet ist und sowohl mit der Weißlicht-LED-Anordnung 14 als auch mit der infraroten LED 16 wirkverbunden ist.

Die Weißlicht-LED-Anordnung 14 weist eine blaue LED 14a auf, welche von einem fluoreszenten und/oder phosphoreszenten Konversionselement 14b bedeckt ist. Das von der blauen LED 14a emittierte blaue Licht wird dabei von dem Konversionselement 14b teilweise in sichtbares Licht mit einer längeren Wellenlänge konvertiert, beispielsweise in grünes oder gelbes oder rotes Licht. Diese konvertierten spektralen Komponenten bilden zusammen mit dem übrigen, nicht konvertierten blauen Licht sichtbares Licht, welches als weißes oder annähernd weißes Licht wahrgenommen wird. Je nachdem, wie groß der durch das Konversionselement 14b konvertierte Anteil des von der blauen LED 14a emittierten Lichts ist, wird das resultierende, von der Weißlicht-LED-Anordnung 14 emittierte Licht als warmweiß oder kaltweiß empfunden. Beispielsweise kann die blaue LED 14a zumindest teilweise aus Galliumnitrid bestehen.

Die infrarote LED 16 ist dazu ausgelegt, Licht im infraroten Spektralbereich zu emittieren, insbesondere in einem Spektralbereich von etwa 780 nm bis 1250 nm Wellenlänge. Beispielsweise kann die infrarote LED 16 aus Galliumarsenid, Aluminium-Galliumarsenid und/oder Indium-Galliumarsenid ausgebildet sein.

Die Steuereinheit 18 ist dabei dazu eingerichtet, die Weißlicht-LED-Anordnung 14 derart einzustellen bzw. anzusteuern, dass diese weißes Licht derart emittiert, dass der Teil des Fahrzeuginnenraums, welcher von der Weißlicht-LED-Anordnung 14 zu beleuchten ist, mit der vorgegebenen Lichtleistung bzw. Helligkeit beleuchtet wird. Die vorgegebene Helligkeit kann beispielsweise vom Hersteller in der Steuereinheit 18 hinterlegt sein und/oder durch den Benutzer bzw. Fahrzeuginsassen eingestellt werden.

Außerdem ist die Steuereinheit 18 dazu eingerichtet, die infrarote LED 18 derart einzustellen bzw. anzusteuern, dass das von dem Fahrzeugbeleuchtungssystem 10 emittierte Licht einen infraroten spektralen Leistungsanteil von mindestens 10 % der gesamten Lichtemissionsleistung aufweist. Dabei stellt üblicherweise die Steuereinheit 18 die Emissionsleistung der infraroten LED 16 in Abhängigkeit von der Emissionsleistung der Weißlicht-LED-Anordnung ein, sodass die Vorgabe hinsichtlich des infraroten Leistungsanteils von mindestens 10 % erfüllt wird.

Gemäß einer optionalen Ausführungsform kann das Fahrzeugbeleuchtungssystem 10 derart eingerichtet sein, dass das von dem Fahrzeugbeleuchtungssystem 10 emittierte Licht der spektralen Verteilung von Sonnenlicht entspricht oder zumindest ähnelt.

Figur 2 zeigt ein Fahrzeugbeleuchtungssystem 10 gemäß der in Figur 1 gezeigten optionalen Ausführungsform in einer schematischen Seitenansicht. Dabei ist ferner eine zumindest teilweise transparente und/oder transluzente Einhausung 20 abgebildet, welche die Komponenten des Fahrzeugbeleuchtungssystems 10 umgibt. Außerdem sind in Figur 2 mit den gestrichelten Linien 22 die Lichtkegel beispielhaft gekennzeichnet, in welchen die Weißlicht-LED-Anordnung 14 und die infrarote LED 16 das emittierte Licht abstrahlen. Bevorzugt sind die Weißlicht-LED-Anordnung 14 und die infrarote LED 16 derart ausgestaltet und angeordnet, dass im Fernfeld die Lichtkegel der Weißlicht-LED-Anordnung 14 und der infraroten LED 16 im Wesentlichen überlappen. Dies bedeutet, dass die Weißlicht-LED-Anordnung 14 und die infrarote LED 16 bevorzugt denselben Flächen- und/oder Raumbereich bestrahlen und allenfalls in vernachlässigbaren Randbereichen kein Überlapp der Lichtkegel vorhanden ist. Dies bietet den Effekt, dass nahezu der gesamte Bereich, der durch das Fahrzeugbeleuchtungssystem 10 bestrahlt wird, mit weißem und infrarotem Licht bestrahlt wird.

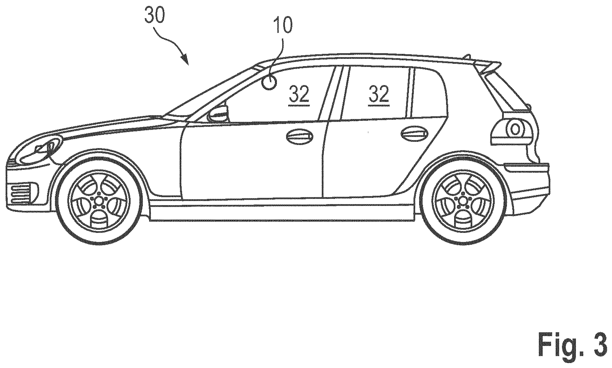

Figur 3 zeigt in einer schematischen Darstellung ein Fahrzeug 30 gemäß einer optionalen Ausführungsform der Erfindung in Seitenansicht. Das Fahrzeug 30 ist als ein Kraftfahrzeug ausgebildet, insbesondere als ein Personenkraftwagen. Die Seitenfenster des Fahrzeugs 30 geben den Blick auf den Fahrzeuginnenraum 32 frei, in welchem nahe an der Position des Innenspiegels ein Fahrzeugbeleuchtungssystem 10 angeordnet ist, welches als ein Fahrzeuginnenraumbeleuchtungssystem ausgebildet ist. Dieses dient dazu, den Innenraum, insbesondere den vorderen Innenraum, des Fahrzeugs 30 zu beleuchten. Das Fahrzeugbeleuchtungssystem 10 ist dabei bevorzugt gemäß der in Figur 1 und 2 erläuterten optionalen Ausführungsform ausgestaltet.

### Bezugszeichenliste

- 10: Fahrzeugbeleuchtungssystem
- 12: Platine
- 14: Weißlicht-LED-Anordnung
- 14a: blaue oder ultraviolette LED
- 14b: Konversionselement
- 16: infrarote LED
- 18: Steuereinheit
- 20: Einhausung
- 22: Lichtkegel
- 30: Fahrzeug
- 32: Fahrzeuginnenraum

## Patentansprüche

1. Verfahren zur Beleuchtung eines Fahrzeuginnenraums (32) unter Verwendung eines Fahrzeugbeleuchtungssystems (10) mit zumindest einer Weißlicht-LED-Anordnung (14) und zumindest einer infraroten LED (16), wobei
- ein Einstellen der Emissionsleistung der zumindest einen Weißlicht-LED-Anordnung (14) derart erfolgt, dass die Lichtemission im sichtbaren Spektralbereich eine vorgegebene Helligkeit aufweist, **dadurch gekennzeichnet, dass**
- ein Einstellen der Emissionsleistung der zumindest einen infraroten LED (16) derart erfolgt, dass die gesamte Lichtemissionsleistung des Fahrzeugbeleuchtungssystems (10) einen infraroten spektralen Leistungsanteil von 40% bis 70% aufweist.

2. Verfahren gemäß Anspruch 1, wobei das Einstellen der Emissionsleistung der zumindest einen infraroten LED (16) derart erfolgt, dass die Lichtemission des Fahrzeugbeleuchtungssystems (10) mit einem sonnenlicht-ähnlichen Spektrum erfolgt.

3. Fahrzeugbeleuchtungssystem (10) zur Durchführung des Verfahrens nach einem der vorhergehenden Ansprüche, umfassend zumindest eine Weißlicht-LED-Anordnung (14) und zumindest eine infrarote LED (16) zur Aussendung von Licht im infraroten Spektralbereich, **dadurch gekennzeichnet, dass** die Weißlicht-LED-Anordnung (14) eine blaue LED (14a) und/oder eine ultraviolette LED und zumindest ein fluoreszierendes und/oder phosphoreszierendes Konversionselement (14b) aufweist, welches einen Teil des von der zumindest einen blauen (14a) und/oder ultravioletten LED emittierten Lichts in Licht mit einer längeren Wellenlänge konvertiert.

4. Fahrzeugbeleuchtungssystem (10) gemäß Anspruch 3, wobei die zumindest eine infrarote LED (16) ein Emissionsspektrum aufweist, welches zwischen 780 nm und 1200 nm Wellenlänge liegt.

5. Fahrzeugbeleuchtungssystem (10) gemäß einem der vorhergehenden Ansprüche 3 und 4, wobei das Fahrzeugbeleuchtungssystem (10) als Fahrzeuginnenraumbeleuchtungssystem ausgebildet ist.

6. Fahrzeug (30) umfassend ein Fahrzeugbeleuchtungssystem (10) gemäß einem der vorhergehenden Ansprüche 3 bis 5.

## Claims

1. Method for illuminating a vehicle interior (32) using a vehicle lighting system (10) comprising at least one white light LED arrangement (14) and at least one infrared LED (16),
- the emission power of the at least one white light LED arrangement (14) being adjusted such that the light emission in the visible spectral range has a predetermined brightness, **characterized in that**
- the emission power of the at least one infrared LED (16) is adjusted such that the total light emission power of the vehicle lighting system (10) has an infrared spectral power component of 40% to 70%.

2. Method according to claim 1, wherein the emission power of the at least one infrared LED (16) is adjusted such that the light emission of the vehicle lighting system (10) takes place with a sunlight-like spectrum.

3. Vehicle lighting system (10) for carrying out the method according to either of the preceding claims, comprising at least one white light LED arrangement (14) and at least one infrared LED (16) for emitting light in the infrared spectral range, **characterized in that** the white light LED arrangement (14) has a blue LED (14a) and/or an ultraviolet LED and at least one fluorescent and/or phosphorescent conversion element (14b) which converts a portion of the light emitted by the at least one blue (14a) and/or ultraviolet LED into light with a longer wavelength.

4. Vehicle lighting system (10) according to claim 3, wherein the at least one infrared LED (16) has an emission spectrum which is between 780 nm and 1200 nm in wavelength.

5. Vehicle lighting system (10) according to either of the preceding claims 3 or 4, wherein the vehicle lighting system (10) is designed as a vehicle interior lighting system.

6. Vehicle (30) comprising a vehicle lighting system (10) according to any of the preceding claims 3 to 5.

## Revendications

1. Procédé permettant l'éclairage d'un habitacle de véhicule (32) en utilisant un système d'éclairage de véhicule (10) comportant au moins un agencement de DEL à lumière blanche (14) et au moins une DEL infrarouge (16), dans lequel
- un réglage de la puissance d'émission de l'au moins un agencement de DEL à lumière blanche (14) est effectué de telle sorte que l'émission de lumière dans le domaine spectral visible présente une luminosité prédéfinie,
**caractérisé en ce que**
- un réglage de la puissance d'émission de l'au moins une DEL infrarouge (16) est effectué de telle sorte que la puissance d'émission de lumière totale du système d'éclairage de véhicule (10) présente une part de puissance spectrale infrarouge allant de 40 % à 70 %.

2. Procédé selon la revendication 1, dans lequel le réglage de la puissance d'émission de l'au moins une DEL infrarouge (16) est effectué de telle sorte que l'émission de lumière du système d'éclairage de véhicule (10) est effectuée avec un spectre similaire à la lumière du soleil.

3. Système d'éclairage de véhicule (10) pour la mise en œuvre du procédé selon l'une des revendications précédentes, comprenant au moins un agencement de DEL à lumière blanche (14) et au moins une DEL infrarouge (16) permettant d'émettre de la lumière dans le domaine spectral infrarouge, **caractérisé en ce que** l'agencement de DEL à lumière blanche (14) présente une DEL bleue (14a) et/ou une DEL ultraviolette et au moins un élément de conversion (14b) fluorescent et/ou phosphorescent qui convertit une partie de la lumière émise par l'au moins une DEL bleue (14a) et/ou ultraviolette en une lumière avec une longueur d'onde plus longue.

4. Système d'éclairage de véhicule (10) selon la revendication 3, dans lequel l'au moins une DEL infrarouge (16) présente un spectre d'émission qui se situe entre 780 nm et 1200 nm de longueur d'onde.

5. Système d'éclairage de véhicule (10) selon l'une des revendications précédentes 3 et 4, dans lequel le système d'éclairage de véhicule (10) est réalisé sous forme de système d'éclairage d'habitacle de véhicule.

6. Véhicule (30) comprenant un système d'éclairage de véhicule (10) selon l'une des revendications précédentes 3 à 5.
